# EUROPEAN PATENT APPLICATION

(11) **EP 3 079 232 A1**
(43) Date of publication of application: **12.10.2016**
(21) Application number: 13898499.2
(22) Date of filing: 03.12.2013
(51) Int. Cl.: H02K 3/04, H02K 3/50

(54) **ELECTRIC POWER COLLECTION/DISTRIBUTION RING AND ELECTRIC MOTOR**

(71) Applicant: Hitachi Metals, Ltd., Tokyo 1088224 (JP)
(72) Inventor: EGAMI, Kenichi, Tokyo 1088224 (JP)
(74) Representative: Betten & Resch
(86) International application number: PCT/JP2013/082446
(87) International publication number: WO 2015/083229

(57) **Abstract**

[Problem] Provided is an electric power collection/distribution ring in which a connection portion to which power supply terminals are connected can be easily formed, even while contributing to size reduction, and also provided is an electric motor. A electric power collection/distribution ring (**11**) is equipped with: first to third bus rings (**31** to **33**) and a neutral-phase bus ring (**34**); and power supply terminals (**41** to **43**) connected to the respective first to third bus rings (**31** to **33**) and also connected to a terminal base (**20**) provided outside the first to third bus rings (**31** to **33**) and the neutral-phase bus ring (**34**). In the electric power collection/distribution ring (**11**), the first to third bus rings (**31** to **33**) have ring portions (**311**, **321**, **331**) and connection portions (**312**, **322**, **332**). The neutral-phase bus ring (**34**) is formed in a ring shape without having a connection portion. The first bus ring (**31**) and the neutral-phase bus ring (**34**) are disposed side by side in a rotational axis line (**O**) direction, and the second bus ring (**32**) and the third bus ring (**33**) are disposed side by side in the rotational axis line (**O**) direction. The first bus ring (**31**) and the neutral-phase bus ring (**34**) are disposed closer to the rotational axis line (**O**) side than the second bus ring (**32**) and the third bus ring (**33**).

## Description

### [Technical Field]

This invention relates to an electric power collection/distribution ring to perform electrical collection and distribution for polyphase windings, and an electric motor with the electric power collection/distribution ring.

### [Background Art]

Conventionally, an electric power collection/distribution ring for an electric motor, which comprises a plurality of conductive members to be connected respectively with windings coiled around an iron core of a stator, has been known (See, e.g., PTL**1**).

The electric power collection/distribution ring described in PTL**1** includes a connection portion comprising first to third, and fourth conductive members and an annular holding member (connection substrate) holding these conductive members. Each of the first to third conductive members is formed by bending a linear element, and comprises a connection portion to be connected to a connecting terminal and a ring portion formed to be annular along a circumferential direction of the holding member. The fourth conductive member is formed by bending a linear element to have a circular-arc-shape.

The connection portion and the ring portion of the first conductive member are arranged on one side with respect to an axial direction of the holding member. The connection portions of the second and third conductive members are arranged on one side with respect to the axial direction of the holding member, and the ring portions of the second and third conductive members are arranged on the other side (on a side of the stator) with respect to the axial direction of the holding member respectively. The fourth conductive member is arranged on one side with respect to the axial direction of the holding member similarly to the first conductive member. Each of the connection portions of the first to third conductive members is configured to extend toward an opposite side of the stator along the axial direction.

### [Prior Art Document]

### [Patent Literature]

PTL**1:** WO2009/025144

### [Summary of the Invention]

### [Problems to be solved by the Invention]

As the connection portion and ring portion are arranged on one side and the other side to sandwich the holding member in the axial direction in the first to third conductive members in the electric power collection/distribution ring described in the PTL**1**, there are some problems in that forming the first to third conductive members is complicated or assembling the first to third conductive members is complicated. Consequently, the Inventor of the present invention conceived to arrange the connection portion and the ring portion collectively on one side of the holding member in the axial direction, in other words, to arrange the connection portions and ring portions of the second and third conductive members on one side of the stator with respect to the axial direction of the holding member, and the connection portions and the ring portions of the first conductive member and a neutral-phase conductive member on an opposite side of the stator with respect to the axial direction of the holding member, respectively, and to use the neutral-phase electrical conductive member as the fourth conductive member.

However, with considering the arrangement of positons of the connection portions and the ring portions in the first to third conductive members and the use of the neutral-phase conductive member as the fourth conductive member, there is a problem in that it is difficult to route the first to third conductive members when each of the connection portions of the first to third conductive members is connected to a terminal base arranged at an inner side than or outside in a radial direction of the electric power collection/distribution ring.

It is an object of the invention to provide an electric power collection/distribution ring and an electric motor using the same, in which a connection portion to be connected to a power supply terminal can be easily formed as well as contributing to downsizing.

### [Means for solving the Problems]

To achieve the object as described above, an embodiment of the invention provides an electric power collection/distribution ring, to be arranged in parallel with a stator in a direction of a rotational axis line of a rotor of a three-phase alternating current electric motor, comprising:
first to third bus rings and a neutral-phase bus ring arranged concentrically about the rotational axis line, each of the first to third bus rings and the neural-phase bus ring being connected to a winding for each phase in the stator; and
a power supply terminal, connected to each of the first to third bus rings, the power supply terminal being connected to a terminal base arranged at an outer side than the first to third bus rings and the neutral-phase bus ring in a direction orthogonal to the rotational axis line,
wherein each of the first to third bus rings comprises an annular section formed annularly about the rotational axis line and a connection portion connecting between the annular section and the power supply terminal,
wherein the neutral-phase bus ring is formed annularly without any connection portion to be connected to the power supply terminal,
wherein the first to third bus rings and the neutral-phase bus ring are arranged such that the first bus ring and the neutral-phase bus ring are arranged side by side in the direction of the rotational axis line, the second bus ring and the third bus ring are arranged side by side in the direction of the rotational axis line, and the first bus ring and the neutral-phase bus ring are arranged closer to the rotational axis line than the second bus ring and the third bus ring.

Also, to achieve the object described above, a further embodiment of the invention provides an electric power collection/distribution ring, to be arranged in parallel with a stator in a direction of a rotational axis line of a rotor of a three-phase alternating current electric motor, comprising:
first to third bus rings and a neutral-phase bus ring arranged concentrically about the rotational axis line, each of the first to third bus rings and the neural-phase bus ring being connected to a winding for each phase in the stator; and
a power supply terminal, connected to each of the first to third bus rings, the power supply terminal being connected to a terminal base arranged at an inner side than the first to third bus rings and the neutral-phase bus ring in a direction orthogonal to the rotational axis line,
wherein each of the first to third bus rings comprises an annular section formed annularly about the rotational axis line, and a connection portion connecting between the annular section and the power supply terminal,
wherein the neutral-phase bus ring is formed annularly without any connection portion to be connected to the power supply terminal,
wherein the first bus ring and the neutral-phase bus ring are arranged side by side in the direction of the rotational axis line, the second bus ring and the third bus ring are arranged side by side in the direction of the rotational axis line, and the first bus ring and the neutral-phase bus ring are arranged at an outer side than the second bus ring and the third bus ring in a direction orthogonal to the rotational axis line.

Also, to achieve the object described above, a still further embodiment of the invention provides an electric motor comprising:
a stator;
a rotor rotatable with respect to the stator; and
an electric power collection/distribution ring arranged in parallel with the stator in a direction of a rotational axis line of the rotor,
wherein the electric power collection/distribution ring comprises:
   first to third bus rings and a neutral-phase bus ring arranged concentrically about the rotational axis line, each of the first to third bus rings and the neural-phase bus ring being connected to a winding for each phase in the stator; and
   a power supply terminal, connected to each of the first to third bus rings, the power supply terminal being connected to a terminal base arranged at an outer side than the first to third bus rings and the neutral-phase bus ring in a direction orthogonal to the rotational axis line,
   wherein each of the first to third bus rings comprises an annular section formed annularly about the rotational axis line and a connection portion connecting between the annular section and the power supply terminal,
   wherein the neutral-phase bus ring is formed annularly without any connection portion to be connected to the power supply terminal,
   wherein the first to third bus rings and the neutral-phase bus ring are arranged such that the first bus ring and the neutral-phase bus ring are arranged side by side in the direction of the rotational axis line, the second bus ring and the third bus ring are arranged side by side in the direction of the rotational axis line, and the first bus ring and the neutral-phase bus ring are arranged closer to the rotational axis line than the second bus ring and the third bus ring.

Also, to achieve the object described above, another embodiment of the invention provides an electric motor comprising;
a stator;
a rotor rotatable with respect to the stator; and
an electric power collection/distribution ring arranged in parallel with the stator in a direction of a rotational axis line of the rotor,
wherein the electric power collection/distribution ring comprises:
first to third bus rings and a neutral-phase bus ring arranged concentrically about the rotational axis line, each of the first to third bus rings and the neural-phase bus ring being connected to a winding for each phase in the stator; and
a power supply terminal, connected to each of the first to third bus rings, the power supply terminal being connected to a terminal base arranged at an inner side than the first to third bus rings and the neutral-phase bus ring in a direction orthogonal to the rotational axis line,
wherein each of the first to third bus rings comprises an annular section formed annularly about the rotational axis line, and a connection portion connecting between the annular section and the power supply terminal,
wherein the neutral-phase bus ring is formed annularly without any connection portion to be connected to the power supply terminal,
wherein the first bus ring and the neutral-phase bus ring are arranged side by side in the direction of the rotational axis line, the second bus ring and the third bus ring are arranged side by side in the direction of the rotational axis line, and the first bus ring and the neutral-phase bus ring are arranged at an outer side than the second bus ring and the third bus ring in a direction orthogonal to the rotational axis line.

### [Advantageous Effects of Invention]

According to the electric power collection/distribution ring and the electric motor of the present invention, it is possible to form a connection portion to be connected to a power supply terminal easily as well as contributing to downsizing.

### [Brief Description of Drawings]

[**FIG.1**]

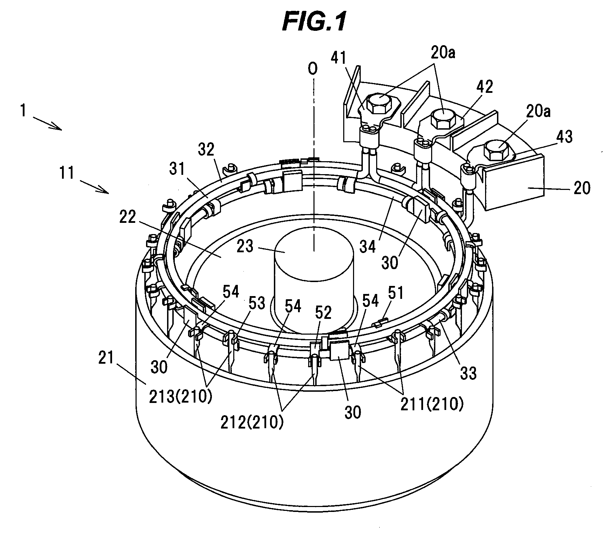

   **FIG.1** is a perspective view showing a configuration example of an electric motor in a first embodiment.
[**FIG.2**]

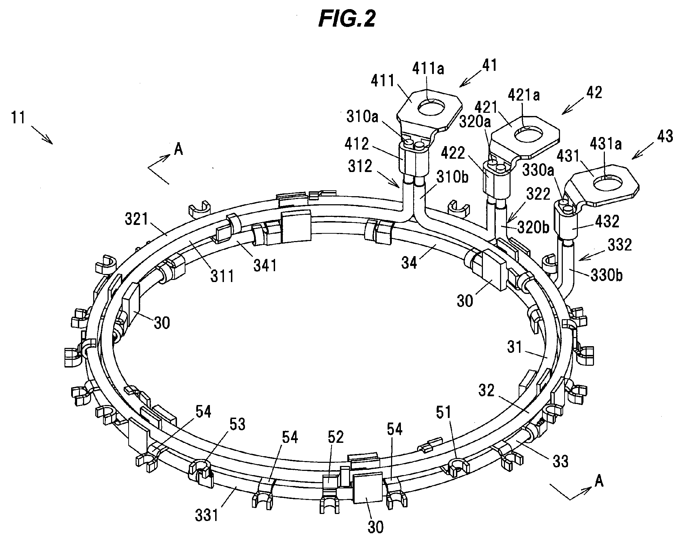

   **FIG.2** is a perspective view showing a configuration example of an electric power collection/distribution ring in the first embodiment.
[**FIG.3**]

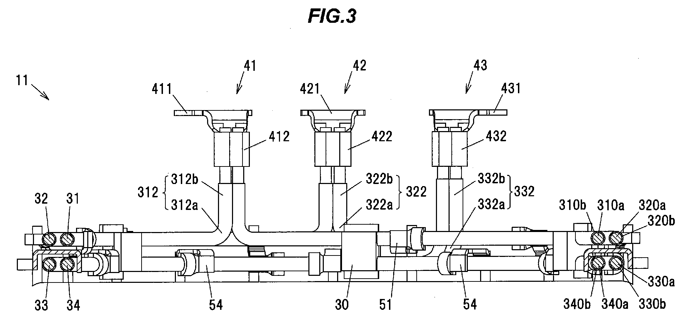

   **FIG.3** is a sectional view of the electric power collection/distribution ring taken along A-A line in **FIG.2**
[**FIG.4A**]

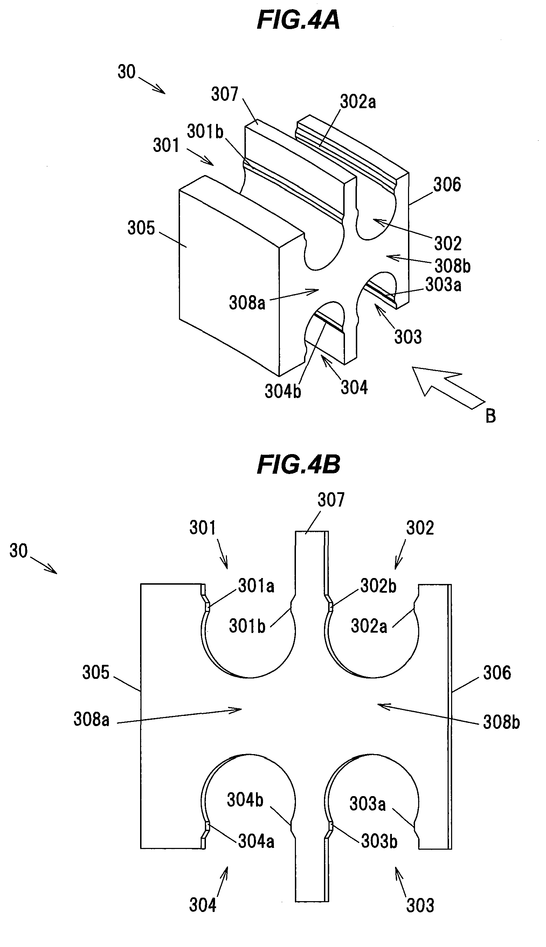

   **FIG.4**A is a perspective view showing a configuration example of a holding member.
[**FIG.4B**]
   **FIG.4**B is a side view of the holding member in **FIG.4**Aviewed from an arrow B.
**[****FIG.5****]**

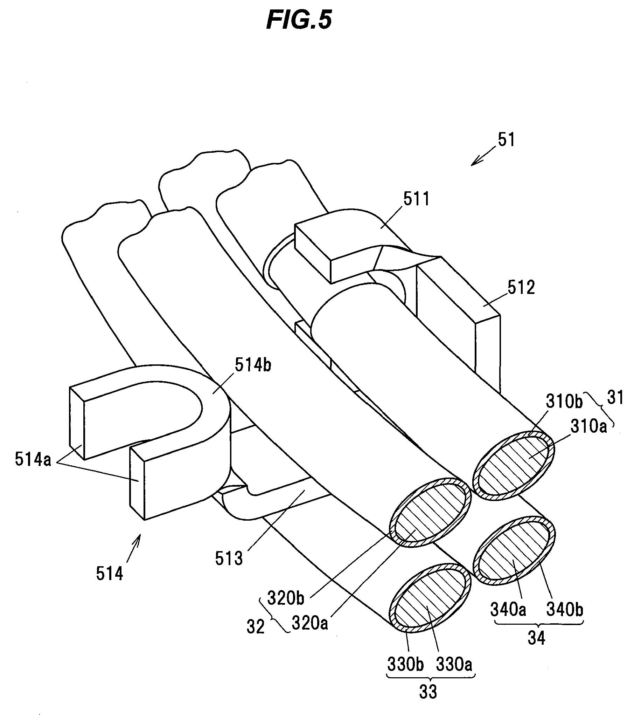

   **FIG.5** is a perspective view showing a first connecting terminal and its peripheral part.
[**FIG.6**]

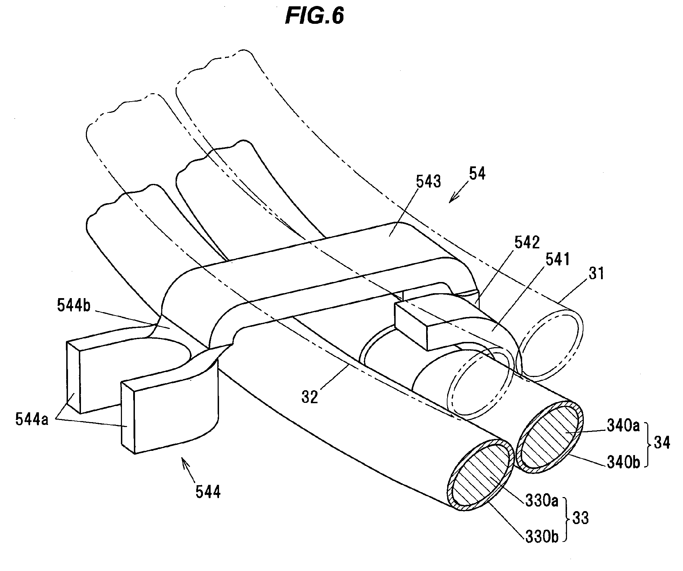

   **FIG.6** is a perspective view showing a neutral-phase connecting terminal and its peripheral part.
[**FIG.7**]

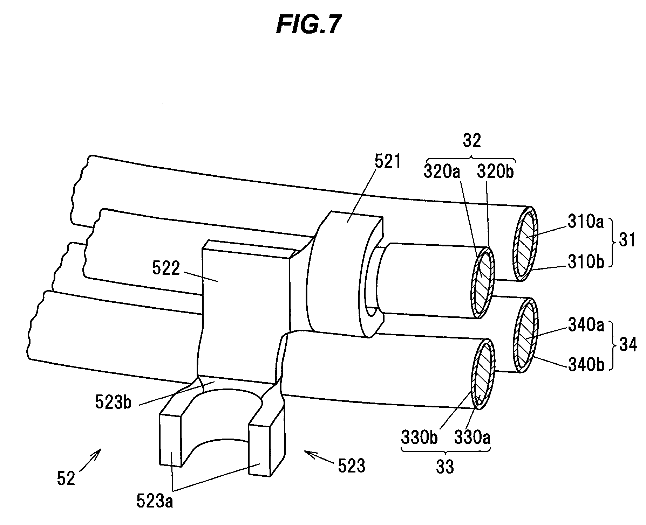

   **FIG.7** is a perspective view showing a second connecting terminal and its peripheral part.
**[****FIG.8****]**

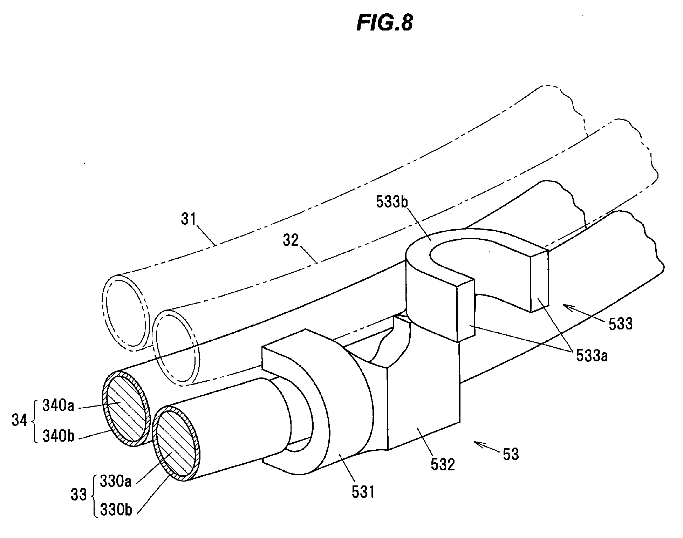

   **FIG.8** is a perspective view showing a third connecting terminal and its peripheral part.
[**FIG.9**]

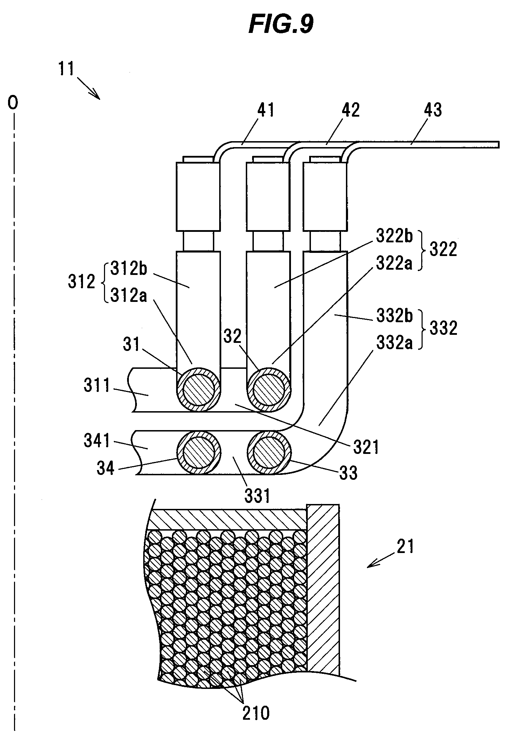

   **FIG.9** is a schematic diagram showing a positional relationship between connection portions of first to third bus rings with respect to a ring portion.
**[****FIG.10****]**

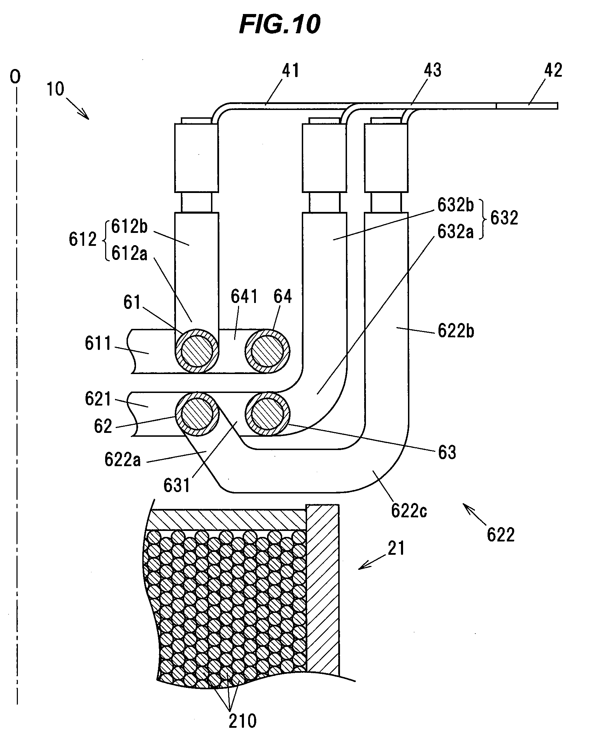

   **FIG.10** is a schematic diagram showing a positional relationship between connection portions of the first to third bus rings with respect to a ring portion in a comparative example of the first embodiment.
**[****FIG.11****]**

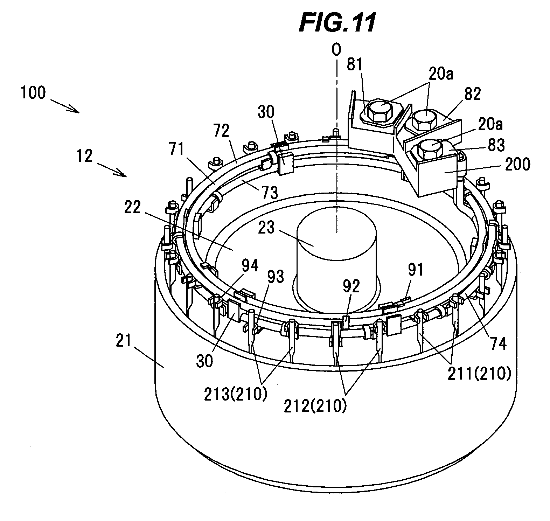

   **FIG.11** is a perspective view showing a configuration example of an electric motor in a second embodiment.
[**FIG.12**]

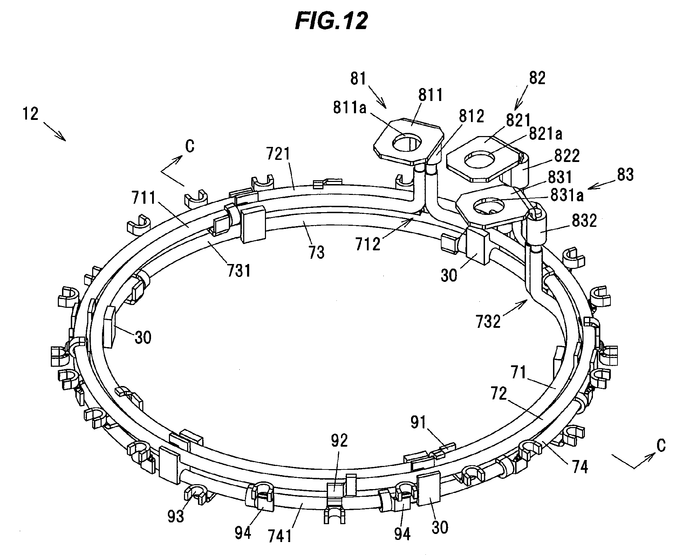

   **FIG.12** is a perspective view showing a configuration example of an electric power collection/distribution ring in the second embodiment.
[**FIG.13**]

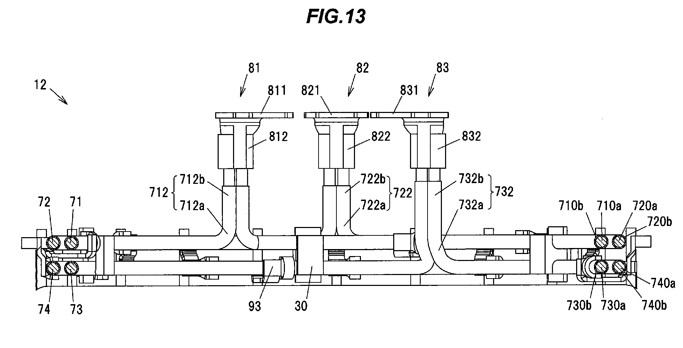

   **FIG.13** is a sectional view of the electric power collection/distribution ring taken along C-C line in **FIG.12**
[**FIG.14**]

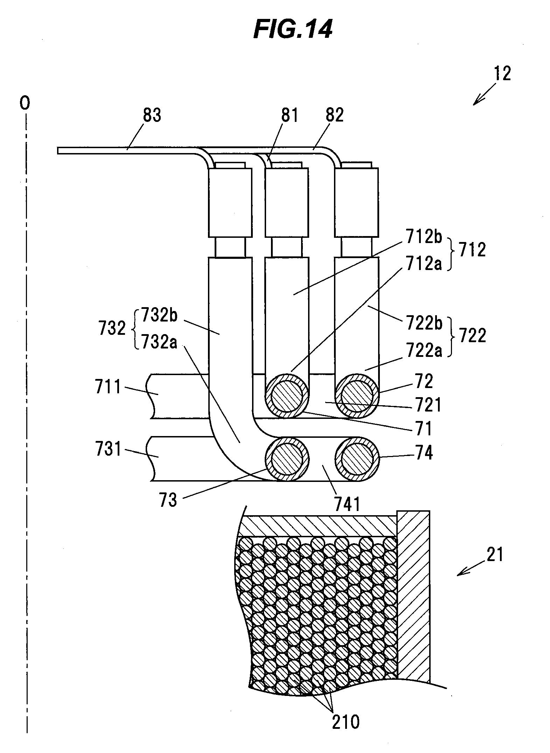

   **FIG.14** is a schematic diagram showing a positional relationship between connection portions of first to third bus rings with respect to a ring portion in the second embodiment.

### [Description of Embodiment]

### [First Embodiment]

A three-phase alternating current electric motor in the first embodiment is used as, for example, a vehicle driving source for running and is supported by a vehicle body.

### (Configuration of electric motor 1)

**FIG.1** is a perspective view showing a configuration example of an electric motor **1** in the first embodiment. Besides, a rotational axis line **O** of a rotor **22** and an output shaft **23** is shown in **FIG.1** by chain line.

The electric motor **1** comprises a cylindrical stator **21,** the rotor **22** rotatable with respect to the stator **21** which is arranged at an inner side than the stator **21** in a radial direction of the stator **21,** the output shaft **23** penetrating a central portion of the rotor **22,** which is integrated with the rotor **22** and rotatably supported, and an electric power collection/distribution ring **11** arranged in parallel with the stator **21** in a direction of the rotational axis line **O** of the rotor **22.** The stator **21,** the rotor **22,** and the output shaft **23** are arranged concentrically about the rotational axis line O, and the output shaft **23,** the rotor **22** and the stator **21** are arranged in this order from an innermost side to an outermost side.

The electric power collection/distribution ring **11** is arranged concentrically about the rotational axis line **O,** and comprising first to third bus rings **31** to **33** and a neutral-phase bus ring **34,** which are connected to respective phase windings **210** (U-phase winding **211,** V-phase winding **212,** W-phase winding **213**) of the stator **21,** first to third power supply terminals **41** to **43** which are connected to the first to third bus rings **31** to **33** respectively, and connected to a terminal base **20** formed outside the first to third bus rings **31** to **33** and the neutral-phase bus ring **34** in a direction orthogonal to the rotational axis line **O** by a bolt **20**a, a plurality of first to third connecting terminals **51** to **53** and a neutral-phase connecting terminal, which are connected to the windings **210**, and a plurality of (in the present embodiment, six) holding members **30** which hold the first to third bus rings **31** to **33** and the neutral-phase bus ring **34**.

The terminal base **20** is connected to a wire harness (not shown) of which one end is connected to an inverter, and the other end of the wire harness and the first to third power supply terminals **41** to **43** are connected electrically with each other via the terminal base **20**. Electric current output from the inverter is fed to the electric motor **1** through the wire harness and the first to third power supply terminals **41** to **43**. The terminal base **20** is fixed on a fixed section in a body of a vehicle (not shown). In the present embodiment, the first to third bus rings **31** to **33** and the neutral-phase bus ring **34** are arranged closer to the stator **21** than the terminal base **20** in the direction of the rotational axis line **O**.

The plurality of (in the present embodiment, four) first connecting terminals **51** are provided at the first bus ring **31**, the plurality of (in the present embodiment, four) second connecting terminals **52** are provided at the second bus ring **32**, the plurality of (in the present embodiment, four) third connecting terminals **53** are provided on the third bus ring **33**, and the plurality of (in the present embodiment, twelve) neutral-phase connecting terminals **54** are provided at the neutral-phase bus ring **34** respectively.

Also, the plurality of first connecting terminals **51** are connected to one end of the U-phase winding **211,** the plurality of second connecting terminals **52** are connected to one end of the V-phase winding **212,** and the plurality of third connecting terminals **53** are connected to one end of the W-phase winding **213** respectively by fusing, for example.

Meanwhile, the plurality of neutral-phase connecting terminals **54** are connected to the other ends of the U-phase winding **211,** the V-phase winding **212,** and the W-phase winding **213** respectively. Hereby, a circuit of current flow through the U-phase winding **211,** the V-phase winding **212,** and the W-phase winding **213** is closed by the neutral-phase bus ring **34** (closed circuit). In other words, the neutral-phase bus ring **34** is a bus ring for forming the closed circuit in the U-phase winding **211,** V-phase winding **212,** and W-phase winding **213.**

### (Configuration of electric power collection/distribution ring)

**FIG.2** is a perspective view showing a configuration example of an electric power collection/distribution ring **11** in the first embodiment. **FIG.3** is a sectional view of the electric power collection/distribution ring **11** taken along A-A line in **FIG.2****.**

The first to third bus rings **31** to **33** are configured by bending insulated electric wires respectively comprising core conductors **310**a, **320**a, **330**a, insulators **310**b, **320**b, **330**b covering the core conductors **310**a, **320**a, **330**a, and comprising ring portions **311, 321, 331** which are formed annularly about the rotational axis line O, and connection portions **312, 322, 332** to connect between the ring portions **311, 321, 331** and the first to third power supply terminals **41** to **43.**

The neutral-phase bus ring **34** is configured by bending an insulated electric wire comprising a core conductor **340**a and an insulator **340**b, and formed annularly about the rotational axis line O without any connection portion to connect with the power supply terminals **41** to **43**.

Since the neutral-phase bus ring **34** is, as described above, the bus ring to provide the closed circuit in the U-phase winding **211**, V-phase winding **212**, and W-phase winding **213**, the connecting terminal is not connected to any end of the neutral-phase bus ring **34**, unlike configurations of the first to third bus rings **31** to **33**. Therefore, the neutral-phase bus ring **34** is consisting of a ring portion **341**.

Note that the term "ring" refers to a shape extending substantially along by around circumferential direction of the stator **21**. For example, even though a part of the bus ring includes a protruding portion in the radial direction, i.e., the bus ring may be formed in a polygonal shape or a plurality of circular-arc shaped conductive members may be combined to provide a single bus ring, if whole of the bus ring extends substantially along by around a circumferential direction of the stator **21**, such a shape is included in "ring".

The first to third bus rings **31** to **33** and the neutral-phase bus ring **34** are arranged such that the first bus ring **31** and the neutral-phase bus ring **34** are arranged in parallel (juxtaposed) in the direction of the rotational axis line **O**, and that the second bus ring **32** and the third bus ring **33** are arranged in parallel in the direction of the rotational axis line **O**. Moreover the first bus ring **31** and the neutral-phase bus ring **34** are arranged closer to the rotational axis line **O** than the second bus ring **32** and the third bus ring **33**.

In the present embodiment, the neutral-phase bus ring **34** is arranged between the first bus ring **31** and the stator **21** (cf. **FIG.1**) in the direction of the rotational axis line **O**, and the third bus ring **33** is arranged between the second bus ring **32** and the stator **21** in the direction of the rotational axis line **O**. In other words, the third bus ring **33** and the neutral-phase bus ring **34** are arranged closer to the stator **21** than the first bus ring **31** and the second bus ring **32** in the direction of the rotational axis line O.

Furthermore, the first to third bus rings **31** to **33** and the neutral-phase bus ring **34** are arranged such that the first bus ring **31** overlaps at least partially the neutral-phase bus ring **34** in a view from the direction of the rotational axis line O, and the second bus ring **32** overlaps at least partially the third bus ring **33** in the view from the direction of the rotational axis line **O**, the first bus ring **31** overlaps at least partially the second bus ring **32** in a view from the direction orthogonal to the rotational axis line **O**, and the third bus ring **33** overlaps at least partially the neutral-phase bus ring **34** in the view from the direction orthogonal to the rotational axis line **O**.

In the present embodiment, the neutral-phase bus ring **34** is arranged so as to overlap the first bus ring **31**, and the third bus. ring **33** is arranged so as to overlap the second bus ring **32** respectively in a view from a side of the terminal base **20** (cf. **FIG.1**) along the rotational axis line, and the second bus. ring **32** is arranged so as to overlap the first bus ring **31**, and the third bus. ring **33** is disposed so as to overlap the neutral-phase bus ring **34** in a view from a side of the output shaft **23** (cf. **FIG.1**) in the direction orthogonal to the rotational axis line **O**.

In the direction orthogonal to the rotational axis line **O**, a distance between the first bus ring **31** and the second bus ring **32**, and a distance between the third bus ring **33** and the neutral-phase bus ring **34** are respectively set to be shorter than diameters of the insulated electric wires constituting the first, the second the third bus rings **31** to **33** respectively and the neutral-phase bus ring **34** respectively.

Also, a distance between the first bus ring **31** and the neutral-phase ring **34** and a distance between the second bus ring **32** and the third bus ring **33** are respectively arranged spaced apart so as not to contact each other of the first to third bus rings **31** to **33** and the neutral-phase bus ring **34**.

A ring portion **311** in the first bus ring **31** is connected to the plurality of first connecting terminals **51**, a ring portion **321** in the second bus ring **32** is connected to the plurality of second connecting terminals **52**, a ring portion **331** in the third bus ring **33** is connected to the plurality of third connecting terminals **53**, and a ring portion **341** in the neutral-phase bus ring **34** is connected to the plurality of neutral-phase connecting terminals **54**, at even intervals in the circumferential direction respectively.

In the present embodiment, when viewed from the terminal base **20** (**cf.****FIG.1**) along the direction of the rotational axis line O, the first to third connecting terminals **51** to **53** and the neutral-phase connecting terminal **54** are arranged such that the first connecting terminal **51**, the neutral-phase connecting terminal **54**, the second connecting terminal **52**, the neutral-phase connecting terminal **54**, the third connecting terminal **53**, the neutral-phase connecting terminal **54**, the first connecting terminal **51**, ...in a clockwise direction along with a circumferential direction of the first to third bus rings **31** to **33**, and the neutral-phase bus ring **34**.

The first connection portion **312** of the first bus ring **31** and the second connection portion **322** of the second bus ring **32** comprise base end sections **312**a, **322**a and extending portions **312**b, **322**b extended from the base end sections **312a, 322**a for the terminal base **20** in the direction of the rotational axis line **O**, integrally. The base end sections **312**a, **322**a are bent in a circular-arc shape respectively in the space between both ends of the ring portions **311**, **312** and the extending portions **312**b, **322**b.

A connection portion **332** of the third bus ring **33** comprises a base end section **332**a and an extending portion **332**b integrally likewise the first and second bus rings **31**, **32**. However a shape of the base end section **332**a is different from the base end sections **312**a, **322**a of the first and second bus rings **31**, **32**. The shape of the base end section **332**a of the third bus ring **33** will be described later.

The first to third power supply terminals **41** to **43** comprise connecting chips **411, 421, 431** having planar shape, and swaging sections **412, 422, 432** integrally which swage the core conductors **310**a, **320**a, **330**a exposed from the insulators **310**b, **320**b, **330**b in tips of the extending portions **312**b, **322**b, **332**b of the first to third bus rings **31**, **32**, **33**.

The connecting chips **411**, **421**, **431** are formed by partially bending ends of the swaging section **412**, **422**, **433** so as to project outwardly in the radial direction of the first to third bus rings **31** to **33** and the neutral-phase bus ring **34**. The connecting chips **411**, **421**, **431** are pierced through through-holes **411**a, **421**a, **431**a in parallel with the direction of the rotational axis line **O** to accommodate the bolt **20**a (cf. **FIG.1**) to connect between the first to third power supply terminal **41** to **43** and the terminal base **20**.

### (The configuration of holding member 30)

**FIG.4**A is a perspective view showing a configuration example of a holding member **30**. **FIG.4**B is a side view of the holding member **30** in **FIG.4**A viewed from an arrow B.

The holding member **30** is made from an insulating member, e.g., resin etc., and comprises an inner wall section **305** arranged at an inner side than the first to third bus rings **31** to **33** and the neutral-phase bus ring **34** in the radial direction, an outer wall section **306** arranged at an outer side than the first to third bus rings **31** to **33** and the neutral-phase bus ring **34** in the radial direction, a central wall section **307** arranged to intervene between the inner wall section **305** and the outer wall portion **306** as one piece. The inner wall section **305**, the outer wall section **306**, and the central wall section **307** are shaped in a gradual arc along a shape of the first to third bus rings **31** to **33** and the neutral-phase bus ring **34**.

A first holding groove **301** to hold the first bus ring **31** and a fourth holding groove **304** to hold the neutral-phase bus ring **34** are formed between the inner wall section **305** and the central wall section **307**, and a second holding groove **302** to hold the second bus ring **32** and a third holding groove **303** to hold the third bus ring **33** are formed between the outer wall section **306** and the central wall section **307**, respectively.

The holding member **30** comprises a partition section **308**a to separate between the first holding groove **301** and the fourth holding groove **304** between the inner wall section **305** and the central section **307**, and a partition section **308**b to separate between the second holding groove **302** and the third holding groove **303** between the outer wall section **306** and the central section **307**.

A pair of salient portions **301**a, **301**b are formed on an inner surface of the first holding groove **301** to prevent the first bus ring **31** from being left out from the first holding groove **301**. Likewise, a pair of salient portions **302**a **302**b are formed on an inner surface of the second holing groove **302**, a pair of salient portions **303**a **303**b are formed on an inner surface of the third holing groove **303**, and a pair of salient portions **304**a **304**b are formed on an inner surface of the fourth holing groove **304**.

As shown in **FIG.4**B, one salient portion **301**a of the pair of salient portions **301**a, **301**b on the first holding groove **301** and one salient portion **304**a of the pair of salient portions **304**a, **304**b on the fourth holding groove **304** are formed on the side of the inner wall section **305**, while the other salient portion **301**b in the first holding groove **301** and the other salient portion **304**b in the fourth holding groove **304** are formed respectively on the side of the central wall section **307**.

One salient portion **302**a of the pair of salient portions **302**a, **302**b on the second holding groove **302** and one salient portion **303**a on the third holding groove **303** are formed on the side of the outer wall section **306**, while the other salient portion **302**b on the second holding groove **302** and the other salient portion **303**b on the third holding groove **303** are formed on the side of the central wall section **307**.

### (Configuration of first to third connecting terminals 51 to 53 and neutral-phase connecting terminals 54)

**FIG.5** is a perspective view of a first connecting terminal **51** and its peripheral part. **FIG.6** is a perspective view of a neutral-phase connecting terminal **54** and its peripheral part. **FIG.7** is a perspective view of a second connecting terminal **52** and its peripheral part. **FIG.8** is a perspective view of a third connecting terminal **53** and its peripheral part. Besides, the first bus ring **31** and the second bus ring **32** are shown by the two-dot chain line in **FIG.6** and **FIG.8****.**

The first connecting terminal **51** integrally comprises, as shown in **FIG.5****,** a swaging section **511** swaged at a portion where the core conductor **310**a of the first bus ring **31** is exposed, a base **512** arranged on a side of one end in a circumferential direction of the first bus ring **31** in the swaging section **511**, an extending portion **513** extending in a radial direction of the first to third bus rings **31** to **33** and the neutral-phase bus ring **34** from a side of one end of the base **512**, and a winding connection portion **514** which is formed at an opposite side of the other end of the base **512** in the extending portion **513**, connected to one end of the U-phase winding **211** (cf. **FIG.1****).**

The swaging section **511** swages the first bus ring **31** in the direction of the rotational axis line **O** from an inside of the radial direction of the first bus ring **31**. The base **512** is formed in a rectangular shape in which long sides are formed in the direction of the rotational axis line **O** and short sides are formed in the circumferential direction of the first to third bus rings **31** to **33** and the neutral-phase bus ring **34**.

The extending portion **513** extends from an end of a side of the stator **21** in a direction of the long sides of the base **512** outwardly in the radial direction of the second bus ring **32**. Namely, the extending portion **513** of the first connecting terminal **51** connected to the first bus ring **31** is extending across an adjacent bus ring (the second bus ring **32**) in the radial direction.

Also, both ends of the extending portion **513** (an end on the side of the base **512** and an end on the side of the winding connection portion **514**) in an extending direction are bent toward an opposite side of the stator **21** in the direction of the rotational axis line **O** (on a side of the terminal base **20**). Accordingly, the extending portion **513** is located closer to the stator **21** than the swaging section **511** and the winding connection portion **514** in the direction of the rotational axis line **O**.

In the present embodiment, the extending portion **513** is interposed between the first bus ring **31** and the neutral-phase bus ring **34**, as well as between the second bus ring **32** and the third bus ring **33** without contacting circumferential surfaces of the first to third bus rings **31** to **33** and the neutral-phase bus ring **34**. In the present embodiment, the separation between the first bus ring **31** and the extending portion **513**, the separation between the second bus ring **32** and the extending portion **513**, the separation between the third bus ring **33** and the extending portion **513**, and the separation between the neutral-phase bus ring **34** and the extending portion **513** are respectively about **1** to **5** mm. Besides, it is enough for the extending portion **513** to intervene at least in a space between the second bus ring **32** and the third bus ring **33**.

The winding connection portion **514** comprises a pair of straight portions **514**a extending toward the radial direction of the first to third bus rings **31** to **33** and the neutral-phase bus ring **34**, and a circular-arc portion **514**b having a circular-arc shape and linking the pair of straight portions **514**a as one piece. In the present embodiment, the circular-arc portion **514b** is located on a side of the swaging section **511** in the radial direction of the first to third bus rings **31** to **33** and the neutral-phase bus ring **34**. Accordingly, the winding connection portion **514** is configured to open outwardly in the radial direction of the second and third bus rings **32**, **33**.

The neutral-phase connecting terminal **54** comprises, as shown in **FIG.6**, a swaging section **541** swaged at a portion where the core conductor **340**a of the neutral-phase bus ring **34** are exposed, a base **542** arranged on a side of one end in the circumferential direction of the swaging section **541** of the neutral-phase bus ring **34**, an extending portion **543** extended toward the radial direction of the first to third bus rings **31** to **33** and the neutral-phase bus ring **34** from a side of one end of the base **542**, and a winding connection portion **544** which is formed at an opposite side of the other end of the base **542** in the extending portion **543**, connected to each of the other ends of the U-phase winding **211**, V-phase winding **212**, and W-phase winding **213** (cf. **FIG.1**) as one piece.

The swaging section **541** swages the neutral-phase bus ring **34** toward the direction of the rotational axis line O from an inside of the radial direction of the neutral-phase bus ring **34**. The base **542** is formed in a rectangular shape in which long sides are formed in the direction of the rotational axis line **O** and short sides are formed in the circumferential direction of the first to third bus rings **31** to **33** and the neutral-phase bus ring **34**.

The extending portion **543** extends from an end on an opposite side of the stator **21** in a direction of the long sides of the base **542** outwardly in the radial direction of the third bus ring **33**. In other words, the extending portion **543** of the neutral-phase connecting terminal **54** which is connected to the neutral-phase bus ring **34** is extended across an adjacent bus ring (the third bus ring **33**) in the radial direction.

Moreover, both ends in an extending direction of the extending portion **543** (the end on the side of the base **542** and the end on the side of the winding connection portion **544**) are bent toward a side of the stator **21** in the direction of the rotational axis line O. Accordingly, the swaging section **541** and the winding connection portion **544** are located closer to the stator **21** than the extending portion **543** in the rotational axis line **O**.

In the present embodiment, the extending portion **543**, likewise the extending portion **513** of the first connecting terminal **51**, is interposed between the first bus ring **31** and the neutral-phase bus ring **34**, and between the second bus ring **32** and the third bus ring **33**, without contacting the circumferential surfaces of the first to third bus rings **31** to **33** and the neutral-phase bus ring **34**. In the present embodiment, the separation between the first bus ring **31** and the extending portion **543**, the separation between the second bus ring **32** and the extending portion **543**, the separation between the third bus ring **33** and the extending portion **543**, and the separation between the neutral-phase bus ring **34** and the extending portion **543** are respectively about **1** to **5** mm. Besides, likewise the first connecting terminal 51, it is enough for the extending portion **543** to intervene at least in a space between the second bus ring **32** and the third bus ring **33**.

The winding connection portion **544** integrally comprises, likewise the winding connection portion **514** of the first connecting terminal **51**, a pair of straight portions **544**a and a circular-arc portion **514**b so as to open outwardly in the radial direction of the second and third bus rings **32**, **33**.

In the present embodiment, the first connecting terminal **51** and the neutral-phase connecting terminal **54** have an identical shape, but differ from each other in an orientation of a position. In other words, the first connecting terminal **51** and the neutral-phase connecting terminal **54** are composed of same shapes in all of the swaging portions **511**, **541**, the bases **512**, **542**, the extending portions **513**, **543**, and the winding connection portions **514**, **544**.

The first connecting terminal **51** is swaged to the first bus ring **31** so as to locate the extending portion **513** at the side of stator **21** with respect to the swaging section **511** and the winding connection portion **514** in the direction of the rotational axis line **O**. Otherwise, the neutral-phase connecting terminal **54** is swaged to the neutral-phase bus ring **34** so as to locate the extending portion **513** at an opposite side of the stator **21** with respect to the swaging section **511** and the winding connection portion **514** in the direction of the rotational axis line **O**.

A cross section as viewed from the radial direction of the first to third bus rings **31** to **33** and the neutral-phase bus ring **54** of the extending portion **513** of the first connecting terminal **51** and the extending portion **543** of the neutral-phase connecting terminal **54** are shaped rectangle which have a short side in the direction of the rotational axis line **O**.

The second connecting terminal **52** integrally comprises, shown in **FIG.7**, a swaging section **521** swaged at a portion where the core conductor **320**a of the second bus ring **32** is exposed, a base **522** which is provided on a side of one end of the swaging section **521** in the circumferential direction of the second bus ring **32**, and a winding connection portion **523** which is formed at one end on the side of the stator **21** in the direction of the rotational axis line **O** in the base **522**, connected to one end of the V-phase winding **212** (cf. **FIG.1**).

The swaging section **521** swages the second bus ring **32** toward the direction of the rotational axis line **O** from an outside of the radial direction of the second bus ring **34**. The base **522** is formed in a rectangular shape in which long sides are formed in the direction of the rotational axis line **O** and short sides are formed in a circumferential direction of the first to third bus rings **31** to **33** and the neutral-phase bus ring **34**.

The winding connection portion **523** integrally comprises, likewise the winding connection portion **514** of the first connecting terminal **51** and the winding connection portion **544** of the neutral-phase connection terminal **54**, a pair of straight portions **523**a and a circular-arc portion **523**b so as to open outwardly in the radial direction of the second and third bus rings **32**, **33**.

The third connecting terminal **53** integrally comprises, as shown in **FIG.8**, a swaging section **531** swaged at a portion where the core conductor **330**a of the third bus ring **33** is exposed, a base **532** which is provided on a side of one end of the swaging section **531** in the circumferential direction of the third bus ring **33**, and a winding connection portion **533** which is formed at one end of an opposite side of the stator **21** in the direction of the rotational axis line **O** in the base **532**, connected to one end of the V-phase winding **212** (cf. **FIG.1**).

The swaging section **531** swages the third bus ring **33** toward the direction of the rotational axis line **O** from an outside of the radial direction of the third bus ring **33**. The base **53** comprises long sides in the direction of the rotational axis line **O** and short sides in the circumferential direction of the first to third bus rings **31** to **33** and the neutral-phase bus ring **34**.

The winding connection portion **533** integrally comprises, likewise the winding connection portion **524** of the second connecting terminal **52**, a pair of straight portions 533a and a circular-arc portion **533**b so as to open outwardly in the radial direction of the second and third bus rings **32**, **33**.

In the present embodiment, the second connecting terminal **52** and the third connecting terminal **53** do not include any extending portion in contrast to the configuration of the first connecting terminal **51** and the neutral-phase connecting terminal **54**.

Also, in the present embodiment, the second connecting terminal **52** and the third connecting terminal **53** have an identical shape, but differ from each other in an orientation of a position. That is to say, the second connecting terminal **52** and the third connecting terminal **53** are composed of same shapes in all of the swaging sections **521**, **531**, the bases **522**, **532**, and the winding connection portions **524**, **534**.

The second connecting terminal **52** is swaged to the second bus ring **32** so as to locate the winding connection portion **524** on a side of the stator **21** with respect to the swaging section **521** in the direction of the rotational axis line **O**. Otherwise, the third connecting terminal **53** is swaged to the third-phase bus ring **33** so as to locate the winding connection portion **533** on an opposite side of the stator **21** with respect to the swaging section **531** in the direction of the rotational axis line **O**.

### (Configuration of connection portions 312, 322, 332)

**FIG.9** is a schematic diagram showing a position of connection portions **312**, **322**, **332** of the first to third bus rings **31** to **33** with respect to the ring portions **311**, **321**, **331**. Besides, the rotational axis line O is shown by chain line in **FIG.9**.

Base end sections **312**a, **322**a of the connection portions **312**, **322** are is configured to extend from both ends of the ring portions **311**, **321** for an opposite side of the stator **21** in a direction in parallel with the rotational axis line **O** respectively with describing a circular-arc. In addition, extending portions **312**b, **322**b are configured to further extend from an end of the end of the bases **312**a, **322**b to the opposite side of the stator **21** in the parallel direction of the rotational axis line **O**.

In other words, the connection portions **312**, **322** of the first and second bus rings **31**, **32** are configured such that the base end sections **312**a, **322**a and the extending portion **312**b, **322**b are extending in the direction parallel with the direction of the rotational axis line **O**.

Otherwise, in the third bus ring **33**, a base end section **332**a of the base **332** is configured to extend outwardly in the radial direction of the third bus ring **33** from both ends of the ring portion **331**, and toward an opposite side of the stator **21** in the direction parallel with the rotational axis line **O**. Then, an extending portion **332**b is configured to extend toward the opposite side of the stator **21** in the direction parallel with the rotational axis line **O** from an end of the end of the base **332**a. Furthermore, the connection portion **332** is located at an outer side than ring portion **331** in the radial direction in a view from the rotational axis line **O**.

### (Comparative example)

**FIG.10** is a schematic diagram showing a position of connection portions **612**, **622**, **632** of the first to third bus rings **61** to **63** with respect to ring portions **611**, **621**, **631** in a comparative example of the first embodiment. Besides, the rotational axis line O is shown by chain line in **FIG.10****.**

An electric power collection/distribution ring **10** in the comparative example differs from the electric power collection/distribution ring **11** in the first embodiment in that mutual positional relationship of the first to third bus rings **61** to **63** and the neutral-phase bus ring **64** and the shapes of the connection portions **612**, **622**, **632** of the first to third bus rings **61** to **63** are different from the mutual positional relationship of the first to third bus rings **61** to **63** and the neutral-phase bus ring **64** and the shapes of the connection portions **312**, **322**, **332** of the first to third bus rings **31** to **33**.

In **FIG.10****,** the same reference numerals are assigned to the elements having substantially the same functions as the elements of the electric power collection/distribution ring **11** in the first embodiment and the redundant description thereof is omitted.

The electric power collection/distribution ring **10** in the comparative example differs from the first embodiment in that the mutual positional relationship of the first to third bus rings **61** to **63** and the neutral-phase bus ring **64** are different from the mutual positional relationship of the first to third bus rings **31** to **33** and the neutral-phase bus ring **34.**

Specifically, the first bus ring **61** and the second bus ring **62** arranged side by side in the direction of the rotational axis line **O** are located closer to with respect to the rotational axis line **O** than the third bus ring **63** and the neutral-phase bus ring **64** arranged side by side in the direction of the rotational axis line **O**. Therefore, the second bus ring **62** is arranged between the first bus ring **61** and the stator **61** in the direction of the rotational axis line **O** and the third bus ring **63** is arranged between the neutral-phase bus ring **64** and the stator **61** in the direction of the rotational axis line **O**.

The connection portion **612** of the first bus ring **61** is configured such that the base end section **612**a is extended toward the opposite side of the stator **21** in the direction of the rotational axis line **O** from both ends of the ring portion **611**, and the extending portion **612**b is further extended toward the opposite side of the stator **21** in the direction of the rotational axis line **O** from an end of the base end section **612**a.

The connection portion **612** of the second bus ring **62** comprises an extended portion **622**c, besides a base end section **622**a and an extending portion **622**b. Specifically, the base end section **622a** is extended from both ends of the ring portion **621** outwardly of the second bus ring **62** in the radial direction and the side of the stator **21** in the direction of the rotational axis line **O**, and the extending portion **622**c is extended from an end of the base end section **622**a outwardly in the radial direction of the third bus ring **63**. Furthermore, the extending portion **622**b is extended to the opposite side of the stator **21** in the direction parallel with the rotational axis line **O** from an end of the extended portion **622**c.

The connection portion **632** of the third bus ring **63** is configured such that the base end section **632**a is extended from both ends of the ring portion **631** outwardly in the radial direction of the third bus ring **63** respectively, and the extending portion **632**b is further extended toward the opposite side of the stator **21** in the direction of the rotational axis line O from an end of the base end section **632**.

From the above, as the second bus ring **62** is arranged closer to the stator **21** than the first bus ring **61** in the direction of the rotational axis line **O** and arranged closer to the rotational axis line **O** than the third bus ring **63**, there is required a portion extending beyond the third bus ring **63** in the radial direction of the first to third bus rings **61** to **63** and the neutral-phase bus ring **64** in the connection portion **622**, i.e. the extending portion 622c. Therefore, the connecting route (wiring) between the second power supply terminal 42 and the ring portion 621 in the second bus ring 62 is complicated.

### (Functions and advantageous effects of the first embodiment)

The first embodiment as described above has the following functions and advantageous effects.

(**1**) As the first to third bus rings 31 to 33 and the neutral-phase bus ring 34 are arranged such that the first bus ring 31 and the neutral-phase bus ring 34 are arranged side by side in the direction of the rotational axis line O, the second bus ring 32 and the third bus ring 33 are arranged side by side in the direction of the rotational axis line O and the first bus ring 31 and the neutral-phase bus ring 34 are arranged closer to the rotational axis line O than the second bus ring 32 and the third bus ring 33, as compared with the electric power collection/distribution ring 10 in the comparative example, it is possible to reduce dimensions of the electric power collection/distribution ring 11 in the direction of the rotational axis line O and the direction (radial direction) orthogonal to the rotational axis line **O** as well as it is possible to simplify the routing of wiring to the first to third power supply terminals **41** to **43** connected to the terminal base **20** arranged at an outer side of the first to third bus rings **31** to **33** and the neutral-phase bus ring **34** in the direction orthogonal to the rotational axis line **O,** in other words, to simplify the shapes of the connection portions **312**, **322**, **332**.

(**2**) As the first to third bus rings **31** to **33** and the neutral-phase bus ring **34** are arranged closer to the stator **21** than the terminal base **20** in the direction of the rotational axis line **O**, and the connection portions **311**, **312**, **313** of the first to third bus rings **31** to **33** have the extending portions **312**b, **322**b, **332**b in the direction of the rotational axis line **O** toward the terminal base **20**, it is possible to shorten the connection distance between the first to third power supply terminals **41** to **43** connected to the tip portions of the extending portions **312**b, **322**b, **332**b and the terminal base **20**.

(**3**) As the distance between the first bus ring **31** and the second bus ring **32** as well as the distance between the third bus ring **33** and the neutral-phase bus ring **34** are shorter than the diameter of the electric wire (the insulated electric wire) which constitutes each of the first to third bus rings **31** to **33** and the neutral-phase bus ring **34** respectively, it is possible to reduce the dimensions of the electric power collection/distribution ring **11** in the radial direction.

### [The Second Embodiment]

Next, the second embodiment will be described later in reference to **FIGS.11** to **14**.

**FIG.11** is a perspective view of a configuration example of an electric motor **100** in the second embodiment. Besides, the rotational axis line **O** is shown by chain line in

### FIG.11.

The electric motor **100** in the second embodiment differs in the configuration of an electric power collection/distribution ring **12** from the electric power collection/distribution ring **11** in the first embodiment, and is similar to the configuration of the electric power collection/distribution ring **11** in the first embodiment except the configuration of the electric power collection/distribution ring **12**.

In **FIGS.11** to **14**, the same reference numerals are assigned to the elements having substantially the same functions as the elements explained in the first embodiment and the redundant description thereof is omitted.

The electric power collection/distribution ring 12 is arranged concentrically about the rotational axis line O, and comprises first to third bus rings 71 to 73 and a neutral-phase bus ring 74, which are annular and connected each of-phase windings 210 (U-phase winding 211, V-phase winding 212, W-phase winding 213) of the stator 21, and first to third power supply terminals 81 to 83 which are connected to the first to third bus rings 71 to 73 respectively and connected to a terminal base 200 which is arranged at an inner side than the first to third bus rings 71 to 73 and the neutral-phase bus ring 74 in a direction orthogonal to the rotational axis line **O** by a bolt **20**a, a plurality of first to third connecting terminals **91** to **93** and a neutral-phase connecting terminal **94** connected to the windings **210**, and a plurality of (in the present embodiment, six) holding members **30** which hold the first to third bus rings **71** to **73** and the neutral-phase bus ring **74**.

In the present embodiment, likewise the first embodiment, the first to third bus rings **71** to **73** and the neutral-phase bus ring **74** are arranged closer to the stator **21** than the terminal base **200** in the direction of the rotational axis line **O**.

**FIG.12** is a perspective view of a configuration example of the electric power collection/distribution ring **12** in the second embodiment. **FIG.13** is a sectional view of the electric power collection/distribution ring **12** taken along **C-C** line in **FIG.12****.** **FIG.14** is a schematic diagram showing a positional relationship of connection portions **712, 722, 732** of the first to third bus rings **71** to **73** with respect to ring portions **711, 721, 731** in the second embodiment. Besides, the rotational axis line **O** is shown by chain line in **FIG.14****.**

The first to third bus rings **71** to **73** are respectively formed, likewise the first to third bus rings **31** to **33** in the first embodiment, from insulated electric wires respectively comprising core conductors **710**a, **720**a, **730**a and insulators **710**b, **720**b, **730**b, and respectively comprise ring portions **711**, **721**, **731** and connection portions **712**, **722**, **732**.

The neutral-phase bus ring **74** is formed, likewise the neutral-phase bus ring **34** in the first embodiment, from an insulated electric wire comprising a core conductor **740**a and an insulator **740**b, and has an annular shape composed of a ring portion **741** without any connection portion to be connected to the power supply terminals **81** to **83**.

As shown in **FIG.13****,** the first to third bus rings **31** to **33** and the neutral-phase bus ring **34** are configured such that, likewise the first embodiment, the first bus ring **71** and the neutral-phase bus ring **74** are arranged side by side in the direction of the rotational axis line **O**, and the second bus ring **72** and the third bus ring **73** are arranged side in the direction of the rotational axis line **O**. Otherwise, unlike the first embodiment, the first bus ring **71** and the neutral-phase bus ring **74** are arranged at an outer side than the second bus ring **72** and the third bus ring **73** in the direction orthogonal to the rotational axis line **O.**

In the present embodiment, likewise the first embodiment, the neutral-phase bus ring **74** is arranged between the first bus ring **71** and the stator **21** in the direction of the rotational axis line **O** (cf. **FIG.11**), and the third bus ring **73** is arranged between the second bus ring **72** and the stator **21.**

Also, likewise the first embodiment, in the orthogonal direction to the rotational axis line O, the distance between the first bus ring **71** and the second bus ring **72** and the distance between the third bus ring **73** and the neutral-phase bus ring **74** are respectively set to be shorter than a diameter of the insulated electric wire constituting the first to third bus rings **71** to **73** and the neutral-phase bus ring **74** respectively.

The first to third power supply terminals **81** to **83** respectively comprise, likewise the first to third power supply terminals **41** to **43** in the first embodiment, connecting chips **811, 821, 831** each having a planar shape, and swaging sections **812, 822, 832** integrally. In the present embodiment, the connecting chips **811, 821, 831** are formed by partially bending ends of the swaging sections **812, 822, 832** to extend toward an inside of a radial direction of the first to third bus rings **71** to **73** and the neutral-phase bus ring **74**.

A first connecting terminal **91** connected to the first bus ring **71** and a second connecting terminal **92** connected to the second bus ring **72** have configurations similar to the first connecting terminal **51** connected to the first bus ring **31** and the second connecting terminal **52** connected to the second bus ring **32** in the first embodiment (cf. **FIGS.5** and **6**).

Otherwise, a third connecting terminal **93** connected to the third bus ring **73** has a configuration similar to the neutral-phase connecting terminal **54** connected to the neutral-phase bus ring **34** in the first embodiment, and a neutral-phase connecting terminal **94** connected to the neutral-phase bus ring **74** has a configuration similar to the third connecting terminal **53** connected to the third bus ring **33** in the first embodiment.

In other words, as a locational relationship between the third bus ring **73** and the neutral-phase bus ring **74** in the present embodiment is opposite to a locational relationship between the third bus ring **33** and the neutral-phase bus ring **34** in the first embodiment in the direction orthogonal to the rotational axis line **O,** also the configurations of the third connecting terminal **93** and the neutral-phase connecting terminal **94** are opposite to those of the third connecting terminal **53** and the neutral-phase connecting terminal **54** in the first embodiment (cf. **FIGS.7** and **8**).

The connection portions **712, 722, 732** of the first to third bus rings **71** to **73** integrally comprise, likewise the connection portions **312, 322, 332** of the first to third bus rings **31** to **33** in the first embodiment, base end sections **712**a, **722**a, **732**a and extending portions **712**b, **722**b, **732**b which are extended from the base end sections **712**a, **722**a, **732**a toward the opposite side of the stator **21** in the direction of the rotational axis line **O.**

In the present embodiment, the first bus ring **71** and the second bus ring **72** are configured such that, likewise the first embodiment, the base end sections **712**a, **722**a are extended to have a circular-arc shape from both ends of the ring portions **311**, **321** toward an opposite side of the stator **21** in the direction parallel with the rotational axis line O respectively.

Then, the extending portions **712**b, **722**b are formed to further extend from ends of the base end sections **712**a, **722**b toward the opposite side of the stator **21** in the direction parallel with the direction of the rotational axis line **O**. In other words, both the base end sections **712**a, **722**a and the extending portions **712**b, **722**b of the connection portions **712**, **722** are extended in the direction parallel with the direction of the rotational axis line O.

Otherwise, the third bus ring **73** is configured such that the base end section **732**a is extended from both ends of the annual portion **731** toward an inner side of the radial direction of the third bus ring **73** and extended to the opposite side of the stator **21** in the direction of the rotational axis line **O**. Then the extending portion **732**b is further extended from an end of the base end section **732**a toward the opposite side of the stator **21** in the direction parallel with the direction of the rotational axis line **O**. Furthermore, the connection portion **732** of the third bus ring **3** is arranged at an inner side of the ring portion **731** in the radial direction.

The second embodiment as described above has the following functions and advantageous effects.

(**1**) As the first to third bus rings **71** to **73** and the neutral-phase bus ring **74** are arranged such that the first bus ring **71** and the neutral-phase bus ring **74** are arranged side by side in the direction of the rotational axis line **O,** the second bus ring **72** and the third bus ring **73** are arranged side by side in the direction of the rotational axis line **O** and the first bus ring **71** and the neutral-phase bus ring **74** are arranged at an outer side than the second bus ring **72** and the third bus ring **73** in the direction orthogonal to the rotational axis line, it is possible to simplify the routing of wiring to the first to third power supply terminals **71** to **73** and connected to the terminal base **200** arranged at an inner side than the first to third bus rings **71** to **73** and the neutral-phase bus ring **74** in the direction orthogonal to the rotational axis line **O,** in other words, it is possible to simplify the shapes of the connection portions **712, 722, 732.**

(**2**) As the first to third bus rings **71** to **73** and the neutral-phase bus ring **74** are arranged at inner side of the stator **21** than the terminal base **200** in the direction of the rotational axis line **O,** and the connection portions **711, 712, 713** of the first to third bus rings **71** to **73** have the extending portions **712b, 722b, 732b** in the direction of the rotational axis line **O** for the terminal base **200,** it is possible to shorten the distance between the first to third power supply terminals **81** to **83** connected to tip portions of the extending portions **712**b, **722**b, **732**b and the terminal base **200.**

**(3)** As the distance between the first bus ring **71** and the second bus ring **72,** the third bus ring **73** and the neutral-phase bus ring **74** are shorter than the diameter of the electric wire (the insulated electric wire) which configures each of the first to third bus rings **71** to **73,** the neutral-phase bus ring **74** respectively, it is possible to reduce the dimensions of the electric power collection/distribution ring **12** in the radial direction.

### (Summary of the embodiments)

Next, technical ideas understood from the embodiments as described above will be described below with using the reference numerals, etc., used in the description of the embodiments. However, each reference numeral, etc., described below is not intended to limit the constituent elements in the claims to the members, etc., specifically described in the embodiments.
[1] An electric power collection/distribution ring (**11**), to be arranged in parallel with a stator (**21**) in a direction of a rotational axis line **O** of a rotor (**22**) of a three-phase alternating current electric motor (**1**), comprising:
   first to third bus rings (**31** to **33**) and a neutral-phase bus ring (**34**), arranged concentrically about the rotational axis line **O**, each of the first to third bus rings (**31** to **33**) and the neural-phase bus ring (**34**) being connected to a winding for each phase (**211**, **212**, **213**) in the stator (**21**); and
   a power supply terminal (**41** to **43**), connected to each of the first to third bus rings (**31** to **33**), the power supply terminal (**41** to **43**) being connected to a terminal base (**20**) arranged at an outer side than the first to third bus rings (**31** to **33**) and the neutral-phase bus ring (**34**) in a direction orthogonal to the rotational axis line **O**,
   wherein each of the first to third bus rings (**31** to **33**) comprises an annular section (**311**, **321**, **331**) formed annularly about the rotational axis line **O** and a connection portion (**312**, **,322, 332**) connecting between the annular section (**311**, **321**, **331**) and the power supply terminal (**41** to **43**),
   wherein the neutral-phase bus ring (**34**) is formed annularly without any connection portion to be connected to the power supply terminal (**41** to **43**),
   wherein the first to third bus rings (**31** to **34**) and the neutral-phase bus ring (**34**) are arranged such that the first bus ring (**31**) and the neutral-phase bus ring (**34**) are arranged side by side in the direction of the rotational axis line **O**, and the second bus ring (**32**) and the third bus ring (**33**) are arranged side by side in the direction of the rotational axis line **O**, and the first bus ring (**31**) and the neutral-phase bus ring (**34**) are arranged closer to the rotational axis line **O** than the second bus ring (**32**) and the third bus ring (**33**).
[**2**] The electric power collection/distribution ring (**11**) according to [**1**], wherein the first to third bus rings (**31** to **33**) and the neutral-phase bus ring (**34**) are arranged closer to the stator (**21**) than the terminal base (**20**) in the direction of the rotational axis line **O**, wherein each of the connection portions (**312**, **322**, **332**) of the first to third bus rings (**31** to **33**) comprises an extending portion (**312b**, **322b**, **332b**) extended toward the terminal base (**20**) in the direction of the rotational axis line **O**, and wherein the neutral-phase bus ring (**34**) is arranged between the first bus ring (**31**) and the stator (**21**) in the direction of the rotational axis line **O**.
[3] The electric power collection/distribution ring (**11**) according to [**1**] or [**2**], wherein the first to third bus rings (**3**1 to **33**) and the neutral-phase bus ring (**34**) are arranged such that the first bus ring (**31**) overlaps at least partially the neutral-phase bus ring (**34**) in a view from the direction of the rotational axis line **O**, the second bus ring (**32**) overlaps at least partially the third bus ring (**33**) in the view from the direction of the rotational axis line **O**, the first bus ring (**31**) overlaps at least partially the second bus ring (**32**) in a view from a direction orthogonal to the rotational axis line **O**, and the third bus ring (**33**) overlaps at least partially the neutral-phase bus ring (**34**) in the view from the direction orthogonal to the rotational axis line **O**.
[**4**] An electric power collection/distribution ring (**12**), to be arranged in parallel with a stator (**21**) in a direction of a rotational axis line **O** of a rotor (**22**) of a three-phase alternating current electric motor (**100**), comprising:
   first to third bus rings (**71** to **73**) and a neutral-phase bus ring (**74**), arranged concentrically about the rotational axis line **O**, the first to third bus rings (**71** to **73**) and the neural-phase bus ring (**74**) being connected to a winding for each phase (**211**, **212**, **213**) in the stator (**21**); and
   a power supply terminal (**81** to **83**), connected to each of the first to third bus rings (**71** to **73**), the power supply terminal (**81** to **83**) being connected to a terminal base (**200**) arranged at an inner side than the first to third bus rings (**71** to **73**) and the neutral-phase bus ring (**74**) in a direction orthogonal to the rotational axis line **O**,
   wherein each of the first to third bus rings (**71** to **73**) comprises an annular section (**711**, **721**, **731**) formed annularly about the rotational axis line **O**, and a connection portion (**712**, **722**, **732**) connecting between the annular section (**711**, **721**, **731**) and the power supply terminal (**81** to **83**),
   wherein the neutral-phase bus ring (**74**) is formed annularly without any connection portion to be connected to the power supply terminal (**81** to **83**),
   wherein the first bus ring (**71**) and the neutral-phase bus ring (**74**) are arranged side by side in the direction of the rotational axis line **O**, the second bus ring (**72**) and the third bus ring (**73**) are arranged side by side in the direction of the rotational axis line **O**, and the first bus ring (**71**) and the neutral-phase bus ring (**74**) are arranged at an outer side than the second bus ring (**72**) and the third bus ring (**73**) in a direction orthogonal to the rotational axis line **O**.
[5] An electric motor (**1**) comprising:
   a stator (**21**);
   a rotor (**22**) rotatable with respect to stator (**21**); and
   an electric power collection/distribution ring (**11**) arranged in parallel with the stator (**21**) in a direction of a rotational axis line **O** of the rotor (**22**),
   wherein the electric power collection/distribution ring (**11**) comprises:
      first to third bus rings (**31** to **33**) and a neutral-phase bus ring (3**4**), arranged concentrically about the rotational axis line **O**, each of the first to third bus rings (**31** to **33**) and the neural-phase bus ring (**34**) being connected to a winding for each phase (**211**, **212**, **213**) in the stator (**21**); and
      a power supply terminal (**41** to **43**), connected to each of the first to third bus rings (**31** to **33**), the power supply terminal (**41** to **43**) being connected to a terminal base (**20**) arranged at an outer side than the first to third bus rings (**31** to **33**) and the neutral-phase bus ring (**34**) in a direction orthogonal to the rotational axis line **O**,
      wherein each of the first to third bus rings (**31** to **33**) comprises an annular section (3**1**1, **321**, **331**) formed annularly about the rotational axis line **O** and a connection portion (**312**, **322**, **332**) connecting between the annular section (**311**, **321**, **331**) and the power supply terminal (**41** to **43**),
      wherein the neutral-phase bus ring (**34**) is formed annularly without any connection portion to be connected to the power supply terminal (**41** to **43**),
      wherein the first to third bus rings (**31** to **34**) and the neutral-phase bus ring (**34**) are arranged such that the first bus ring (**31**) and the neutral-phase bus ring (**34**) are arranged side by side in the direction of the rotational axis line **O**, and the second bus ring (**32**) and the third bus ring (**33**) are arranged side by side in the direction of the rotational axis line **O**, and the first bus ring (**31**) and the neutral-phase bus ring (**34**) are arranged closer to the rotational axis line **O** than the second bus ring (**32**) and the third bus ring (**33**).
[**6**] An electric motor (**100**) comprising;
   a stator (**21**);
   a rotor (**22**) rotatable with respect to stator (**21**); and
   an electric power collection/distribution ring arranged (**12**) in parallel with the stator (**21**) in a direction of a rotational axis line **O** of the rotor;
   wherein the electric power collection/distribution ring (**12**) comprises:
      first to third bus rings (**71** to **73**) and a neutral-phase bus ring (**74**), arranged concentrically about the rotational axis line **O**, the first to third bus rings (**71** to 7**3**) and the neural-phase bus ring (**74**) being connected to a winding for each phase (**211**, **212**, **213**) in the stator (**21**); and
      a power supply terminal (**81** to **83**), connected to each of the first to third bus rings (**71** to **73**), the power supply terminal (**81** to **83**) being connected to a terminal base (**200**) arranged at an inner side than the first to third bus rings (**71** to **73**) and the neutral-phase bus ring (**74**) in a direction orthogonal to the rotational axis line **O**,
      wherein each of the first to third bus rings (**71** to **73**) comprises an annular section (**711**, **721**, **731**) formed annularly about the rotational axis line **O**, and a connection portion (**712**, **722**, **732**) connecting between the annular section (**711**, **721**, **731**) and the power supply terminal (**81** to **83**),
      wherein the neutral-phase bus ring (**74**) is formed annularly without any connection portion to be connected to the power supply terminal (**81** to **83**),
      wherein the first bus ring (**71**) and the neutral-phase bus ring (**74**) are arranged side by side in the direction of the rotational axis line **O**, the second bus ring (**72**) and the third bus ring (**73**) are arranged side by side in the direction of the rotational axis line **O**, and the first bus ring (**71**) and the neutral-phase bus ring (**74**) are arranged at an outer side than the second bus ring (**72**) and the third bus ring (**73**) in a direction orthogonal to the rotational axis line **O**.

Although the embodiments of the invention have been described, the invention is not to be limited to the embodiments. Further, it should be noted that all combinations of the features described in the embodiments are not necessary to solve the problem of the invention.

The various kinds of modifications can be implemented without departing from the gist of the invention. For example, in the embodiment described above, as the winding **210** is drawn to be located at an outer side than the electric power collection/distribution ring **11, 12** in the direction orthogonal to the rotational axis line **O,** the invention is not to be limited to described above, e.g., it is possible to draw the winding **210** to be located at an inner side than the electric power collection/distribution ring **11, 12** in the direction orthogonal to the rotational axis line.

Also, in the embodiments described above, the first to third bus rings **31** to **33, 71** to **73,** and the neutral-phase bus rings **34, 74** are held by the plurality of holding members **30.** The present invention is not limited thereto, and the first to third bus rings **31** to **33, 71** to **73,** and the neutral-phase bus rings **34, 74** may be held by covering with e.g. a mold resin.

Also, in the first embodiment as described above, the extending portions **312**b, **322**b, **332**b of the connection portions **312**, **322**, **332** of the first to third bus rings **31** to **33** are extended toward the terminal base **20** which is arranged at the opposite side of the stator **21** in the direction of the rotational axis line **O**. The present invention is not limited to the embodiment as described above, and e.g. the extending portions **312**b, **322**b, **332**b may be extended to a terminal base which is arranged at the side of the stator **21** in the direction of the rotational axis line **O**. In the second embodiment as described above, similar modification may be made.

Also, in the first embodiment as described above, the connecting chips **411, 421, 431** in the first to third power supply terminals **41** to **43** are bent to be extended outwardly in the radial direction of the first to third bus rings **31** to **33** and the neutral-phase bus ring **34.** The present invention is not limited to the first embodiment as described above, e.g., the connecting chips **411, 421, 431** may be extended in parallel with the rotational axis line O without bending. In the second embodiment as described above, similar modification may be made.

Also, in the first embodiment as described above, the first to third connecting terminals **51** to **53** and the neutral-phase connecting terminal **54** are formed of separate parts different from the first to third bus rings **31** to **33** and the neutral-phase bus ring **34.** The present invention is not limited to the first embodiment as described above, e.g., corresponding parts to the connecting terminal may be formed by bending the first to third bus rings **31** to **33** and the neutral-phase bus ring **34.** In the second embodiment as described above, similar modification may be made.

Also, in the first embodiment as described above, the third bus rings **33, 73** are arranged on the side of the stator **21** in the direction of the rotational axis line **O.** The present invention is not limited to the first embodiment as described above, e.g., the first bus rings **31, 71** or the second bus rings **32, 72** may be arranged on the side of the stator **21** in the direction of the rotational axis line O. Besides, locations of each of the first to third bus rings **31** to **33, 71** to **73** except the neutral-phase bus rings **34, 74** may be not limited in the embodiments as described above.

Also, in the first embodiment as described above, the insulated electric wire is used for the first to third bus rings **31** to **33,** and the neutral-phase bus ring **34.** The present invention is not limited to the first embodiment as described above, e.g., bare wire or bus bar formed by punching a plate etc. may be used for the first to third bus rings **31** to **33** and the neutral-phase bus rings **34.** In the second embodiment as described above, similar modification may be made.

Also, in the first embodiment as described above, the first to third bus rings **31** to **33** and the neutral-phase bus ring **34** are formed in a circular shape. The present invention is not limited to the first embodiment as described above, and the first to third bus rings **31** to **33** and the neutral-phase bus ring **34** may be formed in e.g. elliptical shape or polygonal shape. In the second embodiment as described above, similar modification may be made.

Also, in the first embodiment as described above, the first to third bus rings **31** to **33** and the neutral-phase bus ring **34** are formed by bending one conductive member (the insulated electric wire) in an annular shape. The present invention is not limited to the first embodiment as described above, e.g., a plurality of separate conductive members connected with each other to provide an annular shape may be used for the first to third bus rings **31** to **33** and the neutral-phase bus ring **34.** In the second embodiment as described above, similar modification may be made.

### [List of Reference numerals]

**1, 100:** ELECTRIC MOTOR
**10, 11, 12:** ELECTRIC POWER COLLECTION/DISTRIBUTION RING
**20, 200:** TERMINAL BASE
**21:** STATOR
**22:** ROTOR
**31** to **33, 61** to **63, 71** to **73:** FIRST TO THIRD BUS RINGS
**34, 64, 74:** NEUTRAL-PHASE BUS RING
**41** to **43, 81** to **83:** FIRST TO THIRD POWER SUPPLY TERMINALS
**210:** WINDING
**211:** U-PHASE WINDING
**212:** V-PHASE WINDING
**213:** W-PHASE WINDING
**311, 321, 331, 341, 611, 621, 631, 711, 721, 731, 741:** RING PORTION
**312, 322, 332, 342, 612, 622, 632, 712, 722, 732, 742:** CONNECTION PORTION
**312**b**, 322**b**, 332**b**, 342**b**, 612**b**, 622**b**, 632**b**, 712**b**, 722**b, **732**b, **742**b: EXTENDED PORTION
O: ROTATIONAL AXIS LINE

## Claims

1. An electric power collection/distribution ring, to be arranged in parallel with a stator in a direction of a rotational axis line of a rotor of a three-phase alternating current electric motor, comprising:
first to third bus rings and a neutral-phase bus ring, arranged concentrically about the rotational axis line, each of the first to third bus rings and the neural-phase bus ring being connected to a winding for each phase in the stator; and
a power supply terminal connected to each of the first to third bus rings, the power supply terminal being connected to a terminal base arranged at an outer side than the first to third bus rings and the neutral-phase bus ring in a direction orthogonal to the rotational axis line,
wherein each of the first to third bus rings comprises an annular section formed annularly about the rotational axis line and a connection portion connecting between the annular section and the power supply terminal,
wherein the neutral-phase bus ring is formed annularly without any connection portion to be connected to the power supply terminal,
wherein the first to third bus rings and the neutral-phase bus ring are arranged such that the first bus ring and the neutral-phase bus ring are arranged side by side in the direction of the rotational axis line, and the second bus ring and the third bus ring are arranged side by side in the direction of the rotational axis line, and the first bus ring and the neutral-phase bus ring are arranged closer to the rotational axis line than the second bus ring and the third bus ring.

2. The electric power collection/distribution ring according to claim **1**, wherein the first to third bus rings and the neutral-phase bus ring are arranged closer to the stator than the terminal base in the direction of the rotational axis line, wherein each of the connection portions of the first to third bus rings comprises an extending portion extended toward the terminal base in the direction of the rotational axis line, and wherein the neutral-phase bus ring is arranged between the first bus ring and the stator in the direction of the rotational axis line.

3. The electric power collection/distribution ring according to claim **1** or **2**, wherein the first to third bus rings and the neutral-phase bus ring are arranged such that the first bus ring overlaps at least partially the neutral-phase bus ring in a view from the direction of the rotational axis line, the second bus ring overlaps at least partially the third bus ring in the view from the direction of the rotational axis line, the first bus ring overlaps at least partially the second bus ring in a view from a direction orthogonal to the rotational axis line, and the third bus ring overlaps at least partially the neutral-phase bus ring in the view from the direction orthogonal to the rotational axis line.

4. An electric power collection/distribution ring, to be arranged in parallel with a stator in a direction of a rotational axis line of a rotor of a three-phase alternating current electric motor, comprising:
first to third bus rings and a neutral-phase bus ring, arranged concentrically about the rotational axis line, the first to third bus rings and the neural-phase bus ring being connected to a winding for each phase in the stator; and
a power supply terminal, connected to each of the first to third bus rings, the power supply terminal being connected to a terminal base arranged at an inner side than the first to third bus rings and the neutral-phase bus ring in a direction orthogonal to the rotational axis line,
wherein each of the first to third bus rings comprises an annular section formed annularly about the rotational axis line, and a connection portion connecting between the annular section and the power supply terminal,
wherein the neutral-phase bus ring is formed annularly without any connection portion to be connected to the power supply terminal,
wherein the first bus ring and the neutral-phase bus ring are arranged side by side in the direction of the rotational axis line, the second bus ring and the third bus ring are arranged side by side in the direction of the rotational axis line, and the first bus ring and the neutral-phase bus ring are arranged at an outer side than the second bus ring and the third bus ring in a direction orthogonal to the rotational axis line.

5. An electric motor comprising:
a stator;
a rotor rotatable with respect to stator; and
an electric power collection/distribution ring arranged in parallel with the stator in a direction of a rotational axis line of the rotor,
wherein the electric power collection/distribution ring comprises:
first to third bus rings and a neutral-phase bus ring, arranged concentrically about the rotational axis line, each of the first to third bus rings and the neural-phase bus ring being connected to a winding for each phase in the stator; and
a power supply terminal, connected to each of the first to third bus rings, the power supply terminal being connected to a terminal base arranged at an outer side than the first to third bus rings and the neutral-phase bus ring in a direction orthogonal to the rotational axis line,
wherein each of the first to third bus rings comprises an annular section formed annularly about the rotational axis line and a connection portion connecting between the annular section and the power supply terminal,
wherein the neutral-phase bus ring is formed annularly without any connection portion to be connected to the power supply terminal,
wherein the first to third bus rings and the neutral-phase bus ring are arranged such that the first bus ring and the neutral-phase bus ring are arranged side by side in the direction of the rotational axis line, and the second bus ring and the third bus ring are arranged side by side in the direction of the rotational axis line, and the first bus ring and the neutral-phase bus ring are arranged closer to the rotational axis line than the second bus ring and the third bus ring.

6. An electric motor comprising;
a stator;
a rotor rotatable with respect to stator; and
an electric power collection/distribution ring arranged in parallel with the stator in a direction of a rotational axis line of the rotor;
wherein the electric power collection/distribution ring comprises:
first to third bus rings and a neutral-phase bus ring, arranged concentrically about the rotational axis line, the first to third bus rings and the neural-phase bus ring being connected to a winding for each phase in the stator; and
a power supply terminal, connected to each of the first to third bus rings, the power supply terminal being connected to a terminal base arranged at an inner side than the first to third bus rings and the neutral-phase bus ring in a direction orthogonal to the rotational axis line,
wherein each of the first to third bus rings comprises an annular section formed annularly about the rotational axis line, and a connection portion connecting between the annular section and the power supply terminal,
wherein the neutral-phase bus ring is formed annularly without any connection portion to be connected to the power supply terminal,
wherein the first bus ring and the neutral-phase bus ring are arranged side by side in the direction of the rotational axis line, the second bus ring and the third bus ring are arranged side by side in the direction of the rotational axis line, and the first bus ring and the neutral-phase bus ring are arranged at an outer side than the second bus ring and the third bus ring in a direction orthogonal to the rotational axis line.
